# FASCICULE DE BREVET EUROPEEN

(11) **EP 0 559 559 B1**
(45) Date de publication et mention de la délivrance du brevet: **06.05.1998**
(21) Numéro de dépôt: 93400549.7
(22) Date de dépôt: 03.03.1993
(51) Int. Cl.: H04Q 1/14

(54) **Elément de répartiteur téléphonique, en particulier réglette**
Fernsprechverteilerelement, insbesondere Anschlussklemmleiste
Telephone distributing element, in particular terminal block

(30) Priorité: 03.03.1992 FR 9202501
(43) Date de publication de la demande: 08.09.1993
(73) Titulaire: Saligny, Yves, F-74300 Cluses (FR)
(72) Inventeur: Saligny, Yves, F-74300 Cluses (FR)
(74) Mandataire: Pothet, Jean Rémy Emile Ludovic

(56) Documents cités:
- EP-A- 0 316 259
- EP-A- 0 364 658
- FR-A- 2 660 508
- GB-A- 2 156 604

## Description

La présente invention concerne d'une manière générale les répartiteurs téléphoniques.

Ainsi qu'on le sait, les répartiteurs téléphoniques comportent, usuellement, à ce jour, deux types d'éléments, qui en constituent les éléments essentiels, à savoir, d'une part, des "têtes de câble", auxquelles arrivent, suivant une répartition géographique donnée, les câbles d'abonné, avec la multiplicité de fils qui les constituent, et, d'autre part, des "réglettes", qui assurent une répartition numérique de ces câbles d'abonné, et desquelles partent les câbles reliant l'ensemble à l'autocommutateur concerné, avec, entre ces éléments, des fils de liaison, communément appelés "jarretières".

Sont en outre prévus des composants de filtrage et/ou de protection.

A ce jour, ces composants de filtrage et/ou de protection interviennent dans les têtes de câble du répartiteur et sur les cartes d'abonné de l'autocommutateur.

Les réglettes du répartiteur sont elles usuellement jusqu'ici de simples borniers de raccordement, libres de tout composant de filtration et/ou de protection.

Or il s'avère que, pour être en mesure d'augmenter, à volume donné, la capacité des autocommutateurs, il est maintenant nécessaire de transférer dans le répartiteur les composants de filtrage et/ou de protection normalement présents sur leurs cartes d'abonné.

Il est donc maintenant envisagé d'introduire, dans les réglettes du répartiteur, comme cela se fait déjà pour les têtes de câble, de tels composants de filtrage et/ou de protection.

S'agissant d'une tête de câble, il a été prévu, dans le brevet français qui, déposé le 31 Octobre 1978 sous le No 78 30896, a été publié sous le No 2 440 636, d'établir en rangées les connecteurs à mettre en oeuvre, qui tous présentent au moins une borne de connexion, et il s'agit, d'une part, de connecteurs d'entrée, pour le raccordement des fils d'arrivée, et, d'autre part, pour le raccordement des fils de liaison, de connecteurs de sortie alignés chacun respectivement avec les connecteurs d'entrée, d'adjoindre, à ces connecteurs, au moins un module de filtrage et/ou de protection porteur d'au moins un quelconque composant de filtrage et/ou de protection à insérer entre la borne de connexion d'un connecteur d'entrée et la borne de connexion du connecteur de sortie correspondant, et d'associer aux connecteurs de sortie des canaux propres au guidage des fils de liaison.

En pratique, dans ce brevet français No 78 30896, les connecteurs d'entrée et de sortie d'une même rangée s'étendent dans un même plan, sur la face interne d'une des parois d'un bloc de raccordement modulaire sur la face externe de laquelle s'étendent les canaux de guidage associés, ces canaux de guidage sont tous distincts les uns des autres en comportant tous un coude d'environ 90° entre leur entrée et leur sortie, et les modules de filtrage et/ou de protection mis en oeuvre se présentent sous la forme de tiroirs, qui, pour coopération avec les connecteurs, comportent des lamelles de contact sur la surface inférieure de leur semelle, en sorte que les liaisons électriques entre ces modules de filtrage et/ou de protection et ces connecteurs se font par des contacts du genre patins.

Eu égard à sa configuration d'ensemble, un tel élément de répartiteur ne saurait convenir, sauf à conduire à un encombrement total prohibitif, au cas où, comme en l'espèce, il est nécessaire d'équiper des réglettes de tout ou partie des composants de filtrage et/ou de protection usuellement présents sur les cartes d'abonné de l'autocommutateur.

La présente invention a d'une manière générale pour objet une configuration permettant au contraire de donner satisfaction dans ce cas, tout en pouvant tout aussi bien convenir à des têtes de câble.

De manière plus précise, elle a pour objet un élément de répartiteur téléphonique, du genre comportant, qu'il s'agisse d'une tête de câble ou d'une réglette, d'une part, établis en rangées, une pluralité de connecteurs comportant chacun au moins une borne de connexion, à savoir, pour le raccordement de fils d'arrivée des connecteurs d'entrée, et, alignés chacun respectivement avec ces connecteurs d'entrée, pour le raccordement de fils de liaison, des connecteurs de sortie, et, d'autre part, au moins un module de filtrage et/ou de protection porteur d'au moins un quelconque composant de filtrage et/ou de protection à insérer entre la borne de connexion d'un connecteur d'entrée et la borne de connexion du connecteur de sortie correspondant, avec, associés aux connecteurs de sortie, des canaux propres au guidage des fils de liaison, cet élément de répartiteur téléphonique étant d'une manière générale caractérisé en ce que les canaux associés aux connecteurs de sortie d'une même rangée sont regroupés au sein d'une plaquette de guidage qui s'étend de chant dans l'alignement de cette rangée, et en ce que les rangées de connecteurs ainsi alignées avec les plaquettes de guidage sont chacune bordées par un couloir à la faveur duquel peut s'étendre un module de filtrage et/ou de protection.

Autrement dit, suivant une première caractéristique de l'invention, les modules de filtrage et/ou de protection mis en oeuvre passent à travers les connecteurs.

Il en résulte avantageusement une extrême compacité pour l'ensemble, ce qui permet de satisfaire au logement des divers composants de filtrage et/ou de protection à établir.

Il en résulte également une avantageuse facilité de mise en oeuvre, tant lors du montage qu'en service.

En particulier, suivant une caractéristique complémentaire de l'invention, il est avantageusement possible de prévoir en façade, sur les modules de filtrage et/ou de protection, des alvéoles propres à l'insertion de broches de test.

Il est ainsi possible de procéder à des tests sur les lignes d'abonné sans qu'il soit nécessaire de retirer au préalable le ou les modules de filtrage et/ou de protection correspondants.

Il résulte, également, de la configuration suivant l'invention, la possibilité de substituer très rapidement, si désiré, un module de filtrage et/ou de protection à un autre, ou de remplacer par des connecteurs, au bénéfice de la capacité de l'ensemble, un tel module de filtrage et/ou de protection, si, localement, aucun filtrage ni aucune protection n'est nécessaire.

Il résulte, enfin, de la configuration suivant l'invention, la possibilité d'assurer, si désiré, en atelier, un précâblage des câbles d'arrivée, en les dotant, à leur extrémité, des organes de connexion nécessaires pour leur branchement sur l'autocommutateur, au bénéfice du temps de montage ultérieur in situ.

Préférentiellement, la borne de connexion de chacun des connecteurs de l'élément de répartiteur téléphonique suivant l'invention est en liaison électrique avec une languette de contact qui s'étend transversalement en saillie en direction du couloir correspondant, et, en correspondance, le module de filtrage et/ou de protection associé comporte lui-même transversalement en saillie, pour chacun des connecteurs, une languette de contact propre à venir en contact avec la propre languette de contact de celui-ci.

Ainsi, suivant une autre caractéristique complémentaire de l'invention, la liaison électrique entre les connecteurs et les modules de filtrage et/ou de protection se fait par des contacts du genre couteaux.

Il en résulte avantageusement, une grande simplicité de réalisation.

Préférentiellement, également, les canaux de chacune des plaquettes de guidage sont rectilignes sur toute leur longueur, en étant délimités par des cloisons parallèles, et, de longueurs différentes, en allant successivement du plus court au plus long, ils débouchent tous conjointement dans une même goulotte globalement oblique par rapport à ces cloisons.

Autrement dit, suivant l'invention, ces canaux ne comportent individuellement aucun coude.

Il en résulte avantageusement une grande facilité de mise en place pour les fils de liaison, notamment lorsque, après une première paire de ces fils de liaison, il faut y introduire une deuxième paire.

En effet, suivant une autre caractéristique complémentaire de l'invention, ces canaux sont tous conjointement recouverts par une plaque de fermeture, dont une tranche, biaise, s'étend en bordure de la goulotte dans laquelle ils débouchent.

Une fois en place et dûment raccordés au connecteur de sortie concerné, les fils de liaison prennent appui sur cette tranche, biaise, de la plaque de fermeture.

Ils laissent dès lors totalement libres les canaux sous-jacents à celle-ci, ce qui permet effectivement d'y introduire de nouveaux fils de liaison si désiré.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un élément de répartiteur téléphonique suivant l'invention, vu de l'avant ;
la figure 2 en est une vue en perspective éclatée, avec l'un des modules de filtrage et/ou de protection qu'il comporte légèrement avancé par rapport aux autres ;
la figure 3 est une vue en perspective éclatée, vue de l'arrière, de la partie de cet élément répartiteur téléphonique comportant ses divers connecteurs ;
la figure 4 reprend, à échelle supérieure, le détail de la figure 2, qui, relatif au module de filtrage et/ou de protection représenté légèrement avancé sur cette figure 2, est repéré par un encart IV sur celle-ci ;
la figure 5 est, à échelle encore supérieure, et suivant la ligne V-V de la figure 2, une vue transversale en coupe d'une des rangées de connecteurs que comporte l'élément de répartiteur téléphonique suivant l'invention ;
la figure 6 est une vue partielle en élévation, suivant la flèche VI de la figure 5, de cette rangée de connecteurs, après élimination du capot qui lui est associé à l'arrière ;
la figure 7 en est une vue partielle de bout, suivant la flèche VII de la figure 6 ;
la figure 8 est, à échelle encore supérieure, une vue partielle en perspective d'une borne de connexion de ces connecteurs ;
la figure 9 est, suivant la ligne IX-IX de la figure 2, une vue en élévation, d'une des plaquettes de guidage que comporte l'élément de répartiteur téléphonique suivant l'invention ;
la figure 10 est une vue de bout de cette plaquette de guidage, suivant la flèche X de la figure 9 ;
les figures 11 et 12 en sont des vues en coupe longitudinales suivant chacune respectivement les lignes XI-XI et XII-XII de la figure 9 ;
la figure 13 est, avec un arrachement local, une vue en coupe transversale d'un élément de répartiteur téléphonique suivant l'invention, suivant la ligne XIII-XIII de la figure 1 ;
la figure 14 en est, avec un arrachement local semblable au précédent, une vue partielle en élévation, suivant la flèche XIV de la figure 13 ;
la figure 15 en est, vu de l'intérieur, une autre vue en élévation, suivant la flèche XV de la figure 14 ;
les figures 16 et 17 sont des vues partielles en élévation qui, reprenant chacune pour partie celle de la figure 6, illustrent deux modes d'intervention possibles des connecteurs que comporte l'élément de répartiteur téléphonique suivant l'invention ;
la figure 18 est une vue en coupe transversale qui, sensiblement analogue à celle de la figure 5, se rapporte à une variante de réalisation ;
la figure 19 est une vue en plan, qui, correspondant sensiblement à une vue en coupe transversale du type de celle des figures 5 et 18, se rapporte à une autre variante de réalisation.

Ces figures illustrent, à titre d'exemple, l'application de l'invention au cas où l'élément de répartiteur téléphonique 10 concerné doit constituer une réglette.

Cet élément de répartiteur téléphonique 10 a normalement pour fonction essentielle d'assurer une connexion entre des fils d'arrivée 11E, formant le câble reliant l'ensemble à l'autocommutateur, et des fils de liaison 11S, communément appelés jarretières, provenant des têtes de câble associées.

Globalement, et de manière connue en soi, l'élément de répartiteur téléphonique 10 comporte, dans un châssis 12 qui sera détaillé ultérieurement, une pluralité de connecteurs 14E, 14S comportant chacun eux-mêmes au moins une borne de connexion 15, à savoir, d'une part, pour le raccordement des fils d'arrivée 11E, des connecteurs d'entrée 14E, et, alignés chacun respectivement avec ces connecteurs d'entrée 14E, pour le raccordement des fils de liaison 11S, des connecteurs de sortie 14S.

De manière également connue en soi, et suivant des dispositions décrites plus en détail ultérieurement, il est associé aux connecteurs de sortie 14S des canaux 16 propres au guidage des fils de liaison 11S.

De manière également connue en soi, enfin, pour les têtes de câble, il est prévu, dans l'élément de répartiteur téléphonique 10, au moins un module de filtrage et/ou de protection 17 porteur d'au moins un quelconque composant de filtrage et/ou de protection 18, qui, ne relevant pas de la présente invention, ne sera pas autrement décrit ici.

En pratique, les connecteurs 14E, 14S sont établis en rangées 20 parallèles les unes aux autres, en étant disposés vers l'avant pour les connecteurs de sortie 14S et vers l'arrière pour les connecteurs d'entrée 14E.

Suivant l'invention, les canaux 16 associés aux connecteurs de sortie 14S d'une même rangée 20 sont regroupés au sein d'une plaquette de guidage 21 qui s'étend de chant dans l'alignement de cette rangée 20, et les rangées 20 de connecteurs 14E, 14S ainsi alignées avec des plaquettes de guidage 21 sont chacune bordées par un couloir 22 à la faveur duquel peut s'étendre un module de filtrage et/ou de protection 17.

En pratique, les couloirs 22 bordant les rangées 20 de connecteurs 14E, 14S s'étendent en continu tout au long des plaquettes de guidage 21 alignées avec celles-ci.

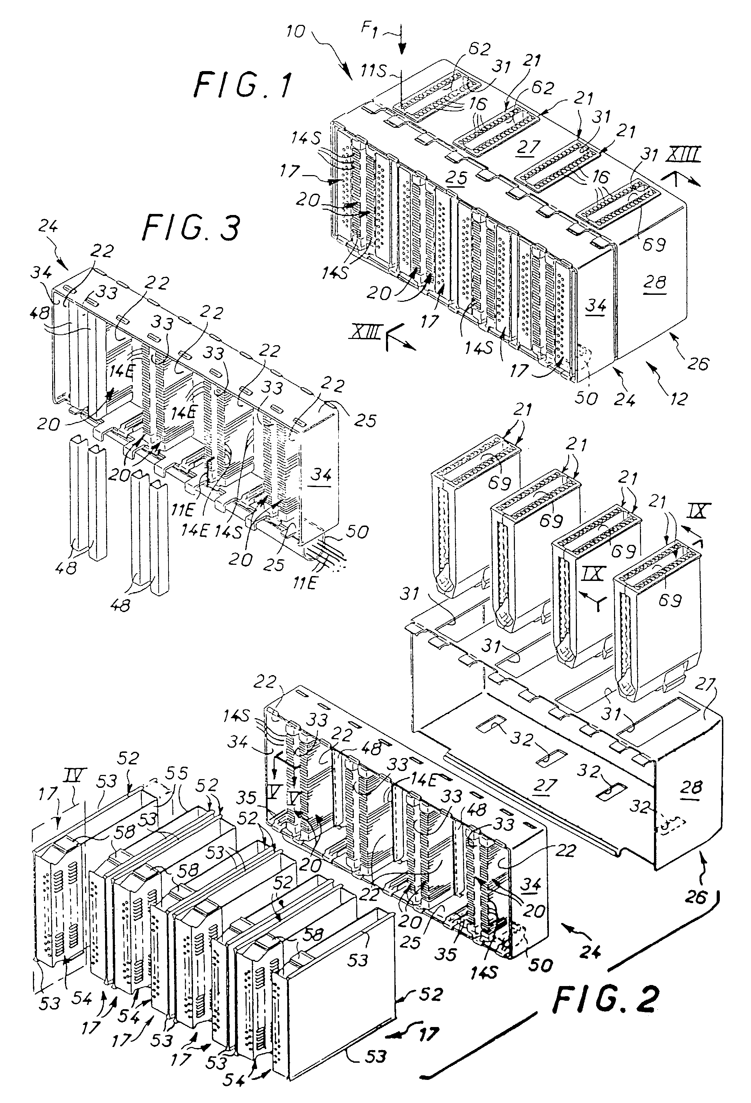

Dans la forme de réalisation plus particulièrement représentée sur les figures 1 à 17, le châssis 12 comporte, d'une part, un cadre 24, dans lequel sont implantées, transversalement, d'un bord longitudinal 25 à un autre, les rangées 20 de connecteurs 14E, 14S, et, d'autre part, un support 26, qui est solidaire de ce cadre 24, à l'arrière de celui-ci, et dans lequel sont implantées, transversalement, d'une paroi longitudinale 27 à une autre, les plaquettes de guidage 21.

S'agissant, plus précisément, comme indiqué, d'une réglette, le support 26 constitue un corps de coffret, qui, outre ses parois longitudinales 27 et deux parois transversales 28, comporte, du côté opposé au cadre 24, un fond 30, et qui, par son ouverture, est abouté à ce cadre 24, en lui étant convenablement solidarisé.

Par exemple, la solidarisation correspondante peut se faire par agrafage et encliquetage, tel que représenté.

Les dispositions correspondantes relevant de l'homme du métier et pouvant donner lieu à de nombreuses variantes de réalisation, elles ne seront pas décrites ici.

Il suffira d'indiquer que, sur une paroi longitudinale 27, le support 26 comporte, parallèlement les uns aux autres, des évidements 31 propres à l'insertion des plaquettes de guidage 21, et que, sur la paroi longitudinale 27 opposée, il comporte, également, des évidements 32 propres à l'encliquetage de ces plaquettes de guidage 21.

En pratique, les rangées 20 de connecteurs 14E, 14S sont regroupées par paires, avec un couloir 22 pour module de filtrage et/ou de protection 17 de chaque côté de chacune de ces paires, et un interstice 33 entre les deux rangées 20 d'une même paire.

Les plaquettes de guidage 21 sont donc elles aussi regroupées par paires.

Dans la forme de réalisation représentée, il y a ainsi, en quatre paires, huit rangées 20 de connecteurs 14E, 14S, et huit plaquettes de guidage 21.

Il y a conjointement, dans cette forme de réalisation, huit modules de filtrage et/ou de protection 17, dont les six intermédiaires sont regroupés par paires, et dont les deux extrêmes sont isolés, les couloirs 22 correspondants s'étendant entre les paires extrêmes de rangées 20 de connecteurs 14E, 14S et les bords transversaux 34 correspondants du cadre 24.

Conjointement, également, le support 26 comporte quatre évidements 31 et quatre évidements 32.

Dans la forme de réalisation représentée, les modules de filtrage et/ou de protection 17 et les rangées 20 de connecteurs 14E, 14S sont montés coulissants dans des glissières 35 parallèles.

En pratique, dans cette forme de réalisation représentée, ces glissières 35, qui sont elles aussi regroupées par paires, sont rapportées, par agrafage, sur les bords longitudinaux 25 du cadre 24.

Quoi qu'il en soit, les modules de filtrage et/ou de protection 17 et les plaquettes de guidage 21 forment, dans cette forme de réalisation, des tiroirs dont les directions de mobilité, c'est-à-dire celles suivant lesquelles peuvent se faire leur mise en place ou leur retrait, sont orthogonales.

Dans la forme de réalisation plus particulièrement représentée sur les figures 1 à 17, les connecteurs d'entrée 14E d'une même rangée 20, d'une part, et les connecteurs de sortie 14S correspondants, c'est-à-dire les connecteurs de sortie 14S de cette même rangée 20, d'autre part, sont conjointement disposés dans un même boîtier 36 commun à cette rangée 20.

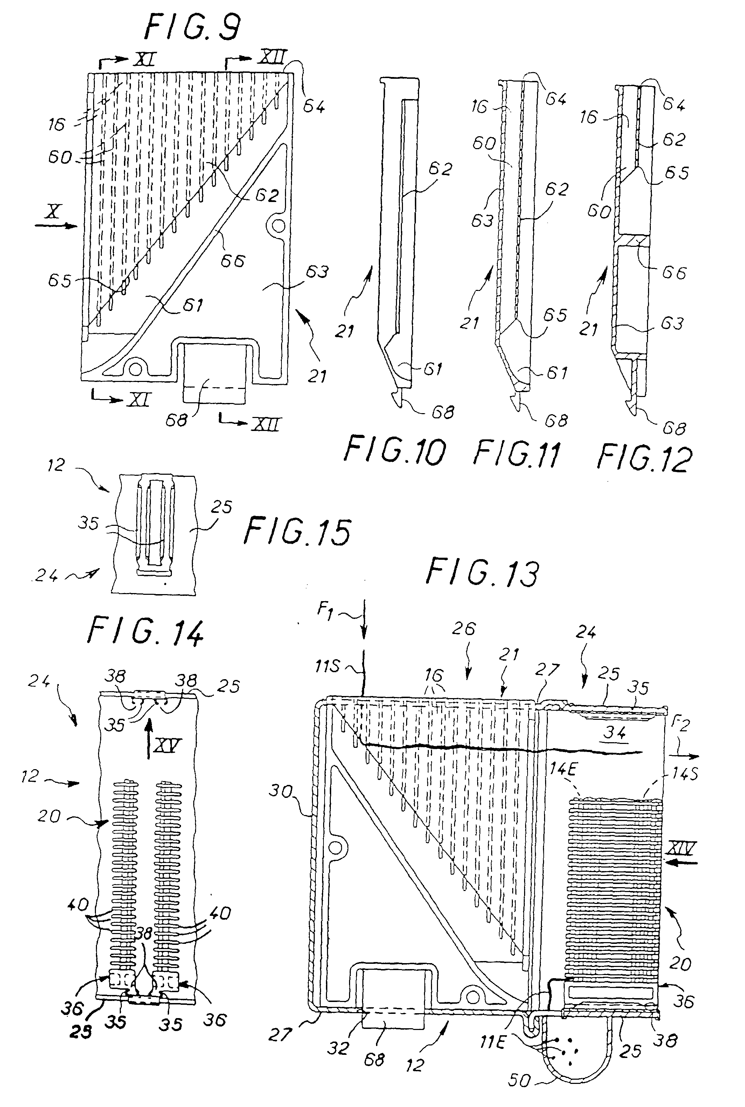

Il s'agit d'un corps en matière isolante, qui, à sa partie supérieure, aussi bien qu'à sa partie inférieure, présente une nervure 38 pour engagement à coulissement dans une glissière 35, figures 13 et 14, et qui, sur toute sa hauteur, présente, parallèlement les unes aux autres, des rainures 40 propres au logement des connecteurs 14E, 14S.

Pour une meilleure lisibilité des figures 13 et 14, les connecteurs 14E, 14S ont été omis sur celles-ci.

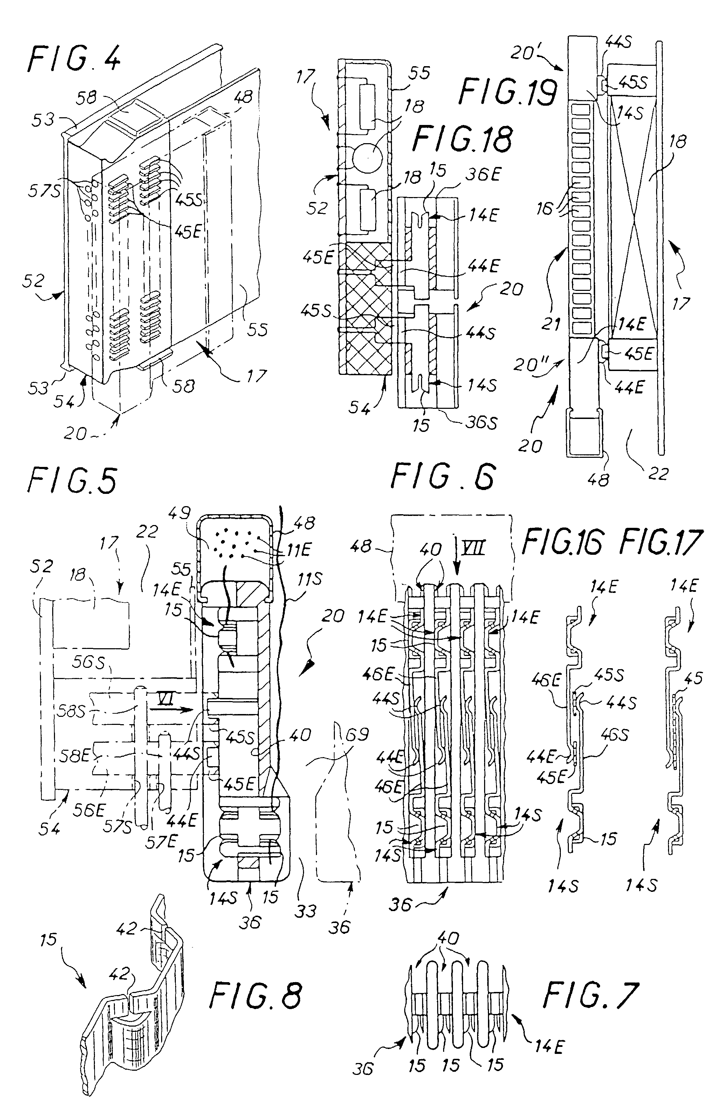

Ils sont par contre apparents sur les figures 5, 6 et 7.

En pratique, dans la forme de réalisation représentée, les connecteurs d'entrée 14E ne comportent qu'une borne de connexion 15, et celle-ci ouvre sur le couloir 22 correspondant, légèrement en retrait par rapport à ce couloir 22, cependant que les connecteurs de sortie 14S comportent, dos à dos, dans cette forme de réalisation, deux bornes de connexion 15, dont une ouvre comme la précédente sur le couloir 22, légèrement en retrait par rapport à celui-ci, mais dont l'autre ouvre, elle, sur l'interstice 33 opposé à ce couloir 22, en saillie dans cet interstice 33.

Dans la forme de réalisation représentée, toutes ces bornes de connexion 15 sont des bornes auto-dénudantes.

Par exemple, venues d'un feuillard avec le connecteur 14E, 14S concerné, elles comportent, à la faveur de deux tronçons obliques de ce feuillard, comme représenté à la figure 8, deux fentes 42 propres à l'insertion d'un quelconque fil 11E, 11S avec dénudage de la gaine isolante de celui-ci.

La ou les bornes de connexion 15 de chacun des connecteurs 14E, 14S sont en liaison électrique avec une languette de contact 44E, 44S qui s'étend transversalement en saillie en direction du couloir 22 correspondant, et, en correspondance, chacun des modules de filtrage et/ou de protection 17 comporte, lui-même, transversalement en saillie, pour chacun de ces connecteurs 14E, 14S, une languette de contact 45E, 45S propre à venir en contact avec la propre languette de contact 44E, 44S de celui-ci.

Les languettes de contact 44E, 44S des connecteurs 14E, 14S sont cintrées, tandis que les languettes de contact 45E, 45S des modules de filtrage et/ou de protection 17 sont droites.

En pratique les languettes de contact 44E, 44S des connecteurs 14E, 14S sont d'un seul tenant avec des lamelles élastiquement déformables 46E, 46S, qui, elles-mêmes d'un seul tenant avec les bornes de connexion 15, viennent chacune respectivement du même feuillard que celles-ci.

Les languettes de contact 44E, 44S forment des prolongements latéraux de ces lamelles élastiquement déformables 46E, 46S, en s'étendant en saillie sur l'une de leurs tranches longitudinales, et, au repos, la lamelle élastiquement déformable 46E des connecteurs d'entrée 14E est au contact de la languette de contact 44S du connecteur de sortie 14S correspondant, figure 6.

S'agissant plus précisément, comme indiqué, d'une réglette, il est prévu, à l'arrière des connecteurs d'arrivée 14E, entre la rangée 20 concernée et la plaquette de guidage 21 correspondante, un capot 48 délimitant avec cette rangée 20 un canal 49 propre au guidage des fils d'arrivée 11E.

En pratique, ce capot 48, qui est omis sur la figure 13, est rapporté, par emboîtement ou encliquetage, sur le boîtier 36 de la rangée 20 concernée, sur la tranche arrière de ce boîtier 36, figure 5.

A la base des rangées 20 de connecteurs 14E, 14S court, en outre, pour les fils d'arrivée 11E, un conduit 50, qui s'étend transversalement par rapport à ces rangées 20, en saillie sur le bord longitudinal 25 correspondant du cadre 24, à l'extérieur de ce cadre 24, et dans lequel débouche chacun des canaux 49 présents à l'arrière des connecteurs d'entrée 14E.

Chacun des modules de filtrage et/ou de protection 17 comporte une carte de support 52 dont les tranches longitudinales 53, dûment épaissies à cet effet, forment des nervures propres à son coulissement dans des glissières 35 du cadre 24.

Sur cette carte de support 52 sont rapportés, à l'avant, un bloc en matière isolante 54, duquel font saillie les languettes de contact 45E, 45S, et, à l'arrière, à l'abri d'un capot 55, les divers composants de filtrage et/ou de protection 18 concernés.

En pratique, chacune des languettes de contact 45E, 45S est formée par l'extrémité d'une lamelle 56E, 56S métallique avec laquelle interfère un alvéole 57E, 57S, et, pour insertion éventuelle d'une quelconque broche de test 58E, 58S destinée à venir en contact avec une telle lamelle 56E, 56S, tel que schématisé en traits interrompus sur la figure 5, cet alvéole 57E, 57S débouche en façade, suivant un champ de test, qui, ainsi, est avantageusement aisément accessible à l'opérateur.

Au dos de la carte de support 52 peuvent par exemple être prévus les circuits de liaison nécessaires entre les lamelles 56E, 56S et les divers composants de filtrage et/ou de protection 18 concernés, suivant les techniques usuelles en la matière.

Quoi qu'il en soit, les languettes de contact 45E, 45S s'étendent en rangées sur la hauteur du bloc en matière isolante 54, et, sur l'une et/ou l'autre des tranches de celui-ci, peut en outre être prévu un contact de masse 58, figure 4.

Les languettes de contact 45E, 45S sont éventuellement décalées transversalement par rapport à la partie courante des lamelles 56E, 56S dont elles forment les extrémités au lieu d'être directement dans leur prolongement.

Les canaux 16 de chacune des plaquettes de guidage 21 sont rectilignes sur toute leur longueur, en étant délimités par des cloisons 60 parallèles, et, de longueurs différentes, en allant successivement du plus court au plus long, ils débouchent tous conjointement, suivant l'invention, dans une même goulotte 61 qui est globalement oblique par rapport aux cloisons 60.

En pratique, les canaux 16 sont recouverts conjointement par une plaque de fermeture 62, qui, commune à l'ensemble de ces canaux 16, en étant parallèle à la paroi 63 de la plaquette de guidage 21 définissant le fond de ceux-ci, s'étend sensiblement à mi-épaisseur pour la plaquette de guidage 21.

En bordure de l'entrée des canaux 16, la tranche 64 de cette plaque de fermeture 62 est droite, à niveau avec la tranche correspondante de la plaquette de guidage 21.

En bordure de la goulotte 61 dans laquelle débouchent les canaux 16, sa tranche 65 est biaise, à l'image de cette goulotte 61.

La plaque de fermeture 62 a donc, globalement, en plan, un contour triangulaire.

Préférentiellement, et tel que représenté, les cloisons 60 délimitant les canaux 16 se prolongent dans la goulotte 61 au-delà de la tranche 65 biaise de la plaque de fermeture 62, en allant en diminuant de hauteur au fur et à mesure qu'elles s'éloignent de celle-ci.

Autrement dit, ces cloisons 60 se prolongent en pointe dans la goulotte 61.

En pratique, la goulotte 61 se trouve elle-même délimitée par une cloison 66 qui court en biais sur une partie de la hauteur de la plaquette de guidage 21.

A leur base, chacune des plaquettes de guidage 21 comporte un crochet élastiquement déformable 68 pour son encliquetage sur le châssis 12, et, plus précisément, sur le support 26 de ce châssis 12, à la faveur d'un évidement 32 de ce support 26.

Comme indiqué précédemment, les plaquettes de guidage 21 sont associées par paires.

Du fait que leur plaque de fermeture 62 s'étend en retrait, les deux plaquettes de guidage 21 d'une même paire définissent conjointement entre elles, dans l'alignement de l'interstice 33 entre les deux rangées 20 correspondantes de connecteurs 14E, 14S, un interstice 69 à la faveur duquel peuvent cheminer les fils de sortie 11S à leur sortie des canaux 16, tel que schématisé pour l'un d'eux sur la figure 13.

Tel que schématisé par une flèche F1 pour l'un d'eux sur la figure 1, chacun de ces fils de sortie 11S est introduit de l'extérieur dans l'un de ces canaux 16, du côté de la tranche 64 droite de la plaque de fermeture 62.

Débouchant dans la goulotte 61, ce fil de sortie 11S est dévié par celle-ci en direction de l'avant, à la faveur, d'abord, de l'interstice 69 correspondant, puis de l'interstice 33 aligné avec celui-ci.

Il suffit, dès lors, de tirer de l'avant ce fil de sortie 11S, suivant la flèche F2 de la figure 13, pour que, guidé par l'extrémité en pointe de la cloison 60 correspondante du canal 16 dans lequel il a été engagé, il vienne se caler sur la tranche 65 biaise de la plaque de fermeture 62, au raccordement à celle-ci de cette cloison 60.

Il reste, ensuite, à l'opérateur, à raccorder ce fil de sortie 11S à celle des bornes de connexion 15 du connecteur de sortie 14S concerné qui ouvre dans l'interstice 33.

Quant aux fils d'arrivée 11E, ils ont été au préalable chacun individuellement raccordés aux bornes de connexion 15 des connecteurs d'arrivée 14E.

Lors de la mise en place des modules de filtrage et/ou de protection 17, les languettes de contact 45E, 45S de ces modules de filtrage et/ou de protection 17 viennent chacune respectivement en prise avec les languettes de contact 44E, 44S des connecteurs d'entrée 14E et de sortie 14S, en écartant l'une de l'autre les lamelles élastiquement déformables 46E, 46S de ceux-ci, figure 16.

Leurs composants de filtrage et/ou de protection 18 se trouvent alors insérés entre ces connecteurs d'entrée 14E et de sortie 14S.

En variante, figure 17, un branchement en parallèle est possible.

Il suffit que, pour deux connecteurs d'entrée 14E et de sortie 14S, le module de filtrage et/ou de protection 17 n'ait qu'une languette de contact 45, tel que représenté à la figure 17.

Suivant des dispositions analogues, une languette en matière isolante peut intervenir ainsi entre les languettes de contact 44E, 44S de deux connecteurs d'entrée 14E et de sortie 14S, pour l'établissement d'une coupure entre eux.

Dans la variante de réalisation représentée sur la figure 18, les connecteurs d'entrée 14E d'une même rangée 20, d'une part, et les connecteurs de sortie 14S correspondants, d'autre part, sont disposés dans des boîtiers 36E, 36S distincts.

Mais, comme précédemment, ils restent encore sensiblement contigus.

Il n'en est plus de même dans la variante de réalisation illustrée par la figure 19.

Suivant cette variante de réalisation, les connecteurs d'entrée 14E et de sortie 14S d'une même rangée 20 sont disposés de part et d'autre de la plaquette de guidage 21 correspondante, dans l'alignement de celle-ci.

Tout se passe donc simplement comme si cette rangée 20 était fractionnée en deux demi-rangées 20', 20".

Les languettes de contact 45E, 45S des modules de filtrage et/ou de protection 17 s'étendent alors conjointement de part et d'autre de leurs composants de filtrage et/ou de protection 18.

La présente invention ne se limite d'ailleurs pas aux formes de réalisation décrites et représentées, mais englobe toute variante d'exécution et/ou de combinaison de leurs divers éléments, notamment en ce qui concerne le châssis.

Par exemple, la partie de ce châssis formant le support des plaquettes de guidage peut être simplifiée, en se réduisant par exemple à deux flasques parallèles, au lieu de constituer un coffret.

En outre, lorsque les connecteurs d'entrée et de sortie sont disposés de part et d'autre des plaquettes de guidage, le châssis est adapté en conséquence.

Au lieu d'être montés dans des glissières, les connecteurs peuvent être fixés par des vis, et ces vis peuvent en assurer conjointement un réglage de position.

Au lieu d'être auto-dénudantes, les bornes de connexion de ces connecteurs peuvent aussi être du type communément dit "wrapping".

Par ailleurs, la présente invention s'applique aussi bien aux têtes de câble qu'aux réglettes.

Dans le cas de têtes de câble, les fils d'arrivée des câbles d'abonné arrivent cependant par l'arrière et remontent parallèlement aux fils de liaison.

## Revendications

1. Elément de répartiteur téléphonique, du genre comportant, d'une part, établis en rangées (20), une pluralité de connecteurs (14E, 14S) comportant chacun au moins une borne de connexion (15), à savoir, pour le raccordement de fils d'arrivée (11E), des connecteurs d'entrée (14E), et, alignés chacun respectivement avec ces connecteurs d'entrée (14E), pour le raccordement de fils de liaison (11S), des connecteurs de sortie (14S), et, d'autre part, au moins un module de filtrage et/ou de protection (17) porteur d'au moins un quelconque composant de filtrage et/ou de protection (18) à insérer entre la borne de connexion (15) d'un connecteur d'entrée (14E) et la borne de connexion (15) du connecteur de sortie (14S) correspondant, avec, associés aux connecteurs de sortie (14S), des canaux (16) propres au guidage des fils de liaison (11S), caractérisé en ce que les canaux (16) associés aux connecteurs de sortie (14S) d'une même rangée (20) sont regroupés au sein d'une plaquette de guidage (21) qui s'étend de chant dans l'alignement de cette rangée (20), et en ce que les rangées (20) de connecteurs (14E, 14S) ainsi alignées avec des plaquettes de guidage (21) sont chacune bordées par un couloir (22) à la faveur duquel peut s'étendre un module de filtrage et/ou de protection (17).

2. Elément de répartiteur téléphonique suivant la revendication 1, caractérisé en ce que le couloir (22) bordant une rangée (20) de connecteurs (14E, 14S) s'étend en continu tout au long de la plaquette de guidage (21) alignée avec celle-ci.

3. Elément de répartiteur téléphonique suivant l'une quelconque des revendications 1, 2, caractérisé en ce que la borne de connexion (15) de chacun des connecteurs (14E, 14S) est en liaison électrique avec une languette de contact (44E, 44S) qui s'étend transversalement en saillie en direction du couloir (22) correspondant, et, en correspondance, le module de filtrage et/ou de protection (17) comporte lui-même transversalement en saillie, pour chacun des connecteurs (14E, 14S), une languette de contact (45E, 45S) propre à venir en contact avec la propre languette de contact (44E, 44S) de celui-ci.

4. Elément de répartiteur téléphonique suivant la revendication 3, caractérisé en ce que chacune des languettes de contact (45E, 45S) que comporte le module de filtrage et/ou de protection (17) est formée par l'extrémité d'une lamelle (56E, 56S) avec laquelle interfère un alvéole (57E, 57S), et, pour l'insertion éventuelle d'une quelconque broche de test (58E, 58S) destinée à venir au contact d'une telle lamelle (56E, 56S), ledit alvéole (57E, 57S) débouche en façade.

5. Elément de répartiteur téléphonique suivant l'une quelconque des revendications 3, 4, caractérisé en ce que la languette de contact (44E, 44S) d'un connecteur (14E, 14S) est d'un seul tenant avec une lamelle élastiquement déformable (46E, 46S), et, au repos, la lamelle élastiquement déformable (46E) d'un connecteur d'entrée (14E) est au contact de la lamelle élastiquement déformable (46S) du connecteur de sortie (14S) correspondant.

6. Elément de répartiteur téléphonique suivant la revendication 5, caractérisé en ce que les connecteurs d'entrée (14E) d'une même rangée (20) et les connecteurs de sortie (14S) correspondants sont conjointement disposés dans un même boîtier (36).

7. Elément de répartiteur téléphonique suivant l'une quelconque des revendications 1 à 4, caractérisé en ce que les connecteurs d'entrée (14E) d'une même rangée (20), d'une part, et les connecteurs de sortie (14S) correspondants, d'autre part, sont disposés dans des boîtiers (36E, 36S) distincts.

8. Elément de répartiteur téléphonique suivant la revendication 7, caractérisé en ce que, les connecteurs d'entrée (14E) et de sortie (14S) d'une même rangée (20) sont disposés de part et d'autre de la plaquette de guidage (21) correspondante.

9. Elément de répartiteur téléphonique suivant l'une quelconque des revendications 1 à 8, caractérisé en ce que les canaux (16) de chacune des plaquettes de guidage (21) sont rectilignes sur toute leur longueur, en étant délimités par des cloisons (60) parallèles, ils sont de longueurs différentes, en allant successivement du plus court au plus long, ils débouchent tous conjointement dans une même goulotte (61) globalement oblique par rapport auxdites cloisons (60), et ils sont recouverts conjointement par une plaque de fermeture (62), dont une tranche (65), biaise, s'étend en bordure de la goulotte (61) dans laquelle ils débouchent.

10. Elément de répartiteur téléphonique suivant l'une quelconque des revendications 1 à 9, caractérisé en ce que les rangées (20) de connecteurs (14E, 14S) sont regroupées par paires, avec un couloir (22) pour module de filtrage et/ou de protection (17) de chaque côté de chacune des paires, et un interstice (33) entre les deux rangées (20) d'une même paire.

11. Elément de répartiteur téléphonique suivant la revendication 10, caractérisé en ce que la borne de connexion (15) des connecteurs d'entrée (14E) ouvre sur le couloir (22), en retrait par rapport à celui-ci, et les connecteurs de sortie (14S) comportent au moins une borne de connexion (15) qui ouvre, elle, sur l'interstice (33), en saillie dans ce dernier.

12. Elément de répartiteur téléphonique suivant l'une quelconque des revendications 1 à 11, caractérisé en ce que, s'agissant d'une réglette, il est prévu à l'arrière des connecteurs d'entrée (14E) de chacune des rangées (20), entre la rangée (20) concernée et la plaquette de guidage (21) correspondante, un capot (48) délimitant un canal (49) propre au guidage des fils d'arrivée (11E).

13. Elément de répartiteur téléphonique suivant la revendication 12, caractérisé en ce que, à la base des rangées (20) de connecteurs (14E, 14S), court, pour les fils d'arrivée (11E), un conduit (50), qui s'étend transversalement par rapport à ces rangées (20), et dans lequel débouche chacun des canaux (49) présents à l'arrière des connecteurs d'entrée (14E).

14. Elément de répartiteur téléphonique suivant l'une quelconque des revendications 1 à 13, caractérisé en ce que son châssis (12) comporte un cadre (24), dans lequel sont implantées les rangées (20) de connecteurs (14E, 14S), et un support (26), qui est solidaire dudit cadre (24), à l'arrière de celui-ci, et dans lequel sont implantées les plaquettes de guidage (21).

15. Elément de répartiteur téléphonique suivant la revendication 14, caractérisé en ce que ledit support (26) constitue un corps de coffret qui est abouté par son ouverture au cadre (24) auquel il est associé, et qui présente sur une paroi (27) des évidements (31) propres à l'insertion des plaquettes de guidage (21).

## Patentansprüche

1. Telefonverteilerelement, das einerseits in Reihen (20) angeordnet mehrere Verbinder (14E, 14S) mit je mindestens einer Anschlußklemme (15) für den Anschluß von ankommenden Drähten (11E) der Eingangsverbinder (14E) und je in Flucht mit diesen Eingangsverbindern (14E) für den Anschluß von Verbindungsdrähten (llS) Ausgangsverbinder (14S) sowie andererseits mindestens einen Filter- und/oder Schutzmodul (17) aufweist, der mindestens ein beliebiges Filter- und/oder Schutzorgan (18) trägt, das zwischen die Anschlußklemme (15) eines Eingangsverbinders (14E) und die Anschlußklemme (15) des entsprechenden Ausgangsverbinders (14S) eingefügt werden soll, wobei den Ausgangsverbindern (14S) Kanäle (16) für die Führung der Verbindungsdrähte (11S) zugeordnet sind, dadurch gekennzeichnet, daß die Kanäle (16), die den Ausgangsverbindern (14S) einer bestimmten Reihe (20) zugeordnet sind, auf einer gemeinsamen Führungsplatte (21) zusammengefaßt sind, die sich auf ihrer Schmalseite stehend in Flucht zu dieser Reihe (20) befindet, und daß die Reihen (20) von so mit Führungsplatten (21) fluchtend angeordneten Verbindern (14E, 14S) je durch einen Schacht (22) begrenzt werden, in dem ein Filter- und/oder Schutzmodul (17) Platz findet.

2. Telefonverteilerelement nach Anspruch 1, dadurch gekennzeichnet, daß der Schacht (22), der an eine Reihe (20) von Verbindern (14E, 14S) anschließt, kontinuierlich entlang der Führungsplatte (21) verläuft, die mit dieser Reihe fluchtet.

3. Telefonverteilerelement nach einem beliebigen der Ansprüche 1 und 2, dadurch gekennzeichnet, daß die Anschlußklemme (15) jedes Verbinders (14E, 14S) in elektrischer Verbindung mit einer Kontaktzunge (44E, 44S) steht, die sich quer in Richtung auf den entsprechenden Schacht (22) vorstehend erstreckt, und daß demgemäß der Filter- und/oder Schutzmodul (17) seinerseits in Querrichtung vorstehend für jeden der Verbinder (14E, 14S) eine eigene Kontaktzunge (45E, 45S) aufweist, die mit der eigenen Kontaktzunge (44E, 44S) dieses Moduls in Kontakt kommt.

4. Telefonverteilerelement nach Anspruch 3, dadurch gekennzeichnet, daß jede der Kontaktzungen (45E, 45S) des Filter- und/oder Schutzmoduls (17) aus dem Ende einer Lamelle (56E, 56S) gebildet ist, mit der eine Hülse (57E, 57S) interferiert, und daß die Hülse (57E, 57S) an der Stirnseite mündet, damit ggf. ein beliebiger Teststecker (58E, 58S) eingefügt werden kann, der mit einer solchen Lamelle (56E, 56S) in Kontakt kommt.

5. Telefonverteilerelement nach einem beliebigen der Ansprüche 3 und 4, dadurch gekennzeichnet, daß die Kontaktzunge (44E, 44S) eines Verbinders (14E, 14S) ein Bauteil mit einer elastisch verformbaren Lamelle (46E, 46S) bildet, und daß im Ruhezustand die elastisch verformbare Lamelle (46E) eines Eingangsverbinders (14E) mit der elastisch verformbaren Lamelle (46S) des entsprechenden Ausgangsverbinders (14S) in Kontakt steht.

6. Telefonverteilerelement nach Anspruch 5, dadurch gekennzeichnet, daß die Eingangsverbinder (14E) einer bestimmten Reihe (20) und die entsprechenden Ausgangsverbinder (14S) gemeinsam in einem Gehäuse (36) untergebracht sind.

7. Telefonverteilerelement nach einem beliebigen der Ansprüche 1 bis 4, dadurch gekennzeichnet, daß die Eingangsverbinder (14E) einer Reihe (20) einerseits und die entsprechenden Ausgangsverbinder (14S) andererseits in getrennten Gehäusen (36E, 36S) untergebracht sind.

8. Telefonverteilerelement nach Anspruch 7, dadurch gekennzeichnet, daß die Eingangsverbinder (14E) und Ausgangsverbinder (14S) einer gemeinsamen Reihe (20) zu beiden Seite der entsprechenden Führungsplatte (21) angeordnet sind.

9. Telefonverteilerelement nach einem beliebigen der Ansprüche 1 bis 8, dadurch gekennzeichnet, daß die Kanäle (16) jeder der Führungsplatten (21) über ihre ganze Länge geradlinig sind und durch parallele Wände (60) begrenzt werden, daß die Länge der Kanäle von einem kürzesten zu einem längsten regelmäßig zunimmt, daß sie alle in eine gemeinsame Rinne (61) münden, die global schräg bezüglich der Wände (60) verläuft und daß die Kanäle durch eine Verschlußplatte (62) gemeinsam verschlossen sind, von der eine schräge Kante (65) sich entlang des Randes der Rinne (61) erstreckt, in die die Kanäle münden.

10. Telefonverteilerelement nach einem beliebigen der Ansprüche 1 bis 9, dadurch gekennzeichnet, daß die Reihen (20) von Verbindern (14E, 14S) paarweise zusammengefaßt sind, wobei ein Schacht (22) zur Aufnahme eines Filter- und/oder Schutzmoduls (17) auf jeder Seite jedes Paars und ein Zwischenraum (33) zwischen den beiden Reihen (20) eines Paars vorgesehen sind.

11. Telefonverteilerelement nach Anspruch 10, dadurch gekennzeichnet, daß die Anschlußklemme (15) der Eingangsverbinder (14E) in den Schacht (22) zurückgesetzt von diesem mündet und daß die Ausgangsverbinder (14S) mindestens eine Anschlußklemme (15) besitzen, die ihrerseits in den Zwischenraum (33) mündet, und in diesen hineinragt.

12. Telefonverteilerelement nach einem beliebigen der Ansprüche 1 bis 11, dadurch gekennzeichnet, daß, falls es sich um eine Leiste handelt, hinter den Eingangsverbindern (14E) jeder Reihe (20) zwischen der betreffenden Reihe (20) und der entsprechenden Führungsplatte (21) eine Haube vorgesehen ist, die einen Kanal (49) zur Führung der ankommenden Drähte (11E) begrenzt.

13. Telefonverteilerelement nach Anspruch 12, dadurch gekennzeichnet, daß an der Basis der Reihen (20) von Verbindern (14E, 14S) für die ankommenden Drähte (llE) ein Kanal (50) verläuft, der sich quer bezüglich dieser Reihen (20) erstreckt und in den jeder der Kanäle (49) mündet, die hinter den Eingangsverbindern (14E) liegen.

14. Telefonverteilerelement nach einem beliebigen der Ansprüche 1 bis 13, dadurch gekennzeichnet, daß sein Chassis (20) einen Rahmen (24), in dem die Reihen (20) von Verbindern (14E, 14S) sitzen, und einen Träger (26) enthält, der mit dem Rahmen (24) an dessen Hinterseite fest verbunden ist und in dem die Führungsplatten (21) angeordnet sind.

15. Telefonverteilerelement nach Anspruch 14, dadurch gekennzeichnet, daß der Träger (26) einen Kasten bildet, der mit seiner Öffnung am Rahmen (24) anliegt, dem er zugeordnet ist, und daß der Träger auf einer Wand (27) Ausschnitte (31) zum Einfügen der Führungsplatten (21) besitzt.

## Claims

1. A telephone distribution frame element, of the type including firstly a plurality of connectors (14E, 14S) disposed in rows (20), each connector having at least one connection terminal (15), namely input connectors (14E) for connection to incoming wires (11E), and output connectors (14S), aligned respectively with said input connectors (14E), for connection to link wires (11S), and secondly at least one filtering and/or protection module (17) carrying at least one arbitrary filtering and/or protection component (18) to be inserted between the connection terminal (15) of an input connector (14E) and the connection terminal (15) of the corresponding output connector (14S), with channels (16) suitable for guiding the link wires (llS) being associated with the output connectors (14S), said element being characterized in that the channels (16) associated with the output connectors (14S) in the same row (20) are grouped together inside a guide plate (21) which extends on edge and in alignment with the row (20), and in that each of the rows (20) of connectors (14E, 14S) aligned in this way with the guide plates (21) is flanked on one side by a passage (22) in which a filtering and/or protection module (17) can extend.

2. A telephone distribution frame element according to claim 1, characterized in that the passage (22) flanking a row (20) of connectors (14E, 14S) extends continuously over the guide plate (21) that is aligned with the row.

3. A telephone distribution frame element according to claim 1 or 2, characterized in that the connection terminal (15) on each of the connectors (14E, 14S) is electrically connected to a contact tab (44E, 44S) which projects transversely towards the corresponding passage (22), and the filtering and/or protection module (17) is in turn provided with a corresponding transversely-projecting contact tab (45E, 45S) for each of the connectors (14E, 14S), which contact tab is suitable for making contact with the contact tab (44E, 44S) on the connector.

4. A telephone distribution frame element according to claim 3, characterized in that each of the contact tabs (45E, 45S) on the filtering and/or protection module (17) is formed by the end of a metal blade (56E, 56S) intersecting a socket (57E, 57S), and, for the purposes of optionally inserting an arbitrary test pin (58E, 58S) so that it can be put into contact with such a blade (56E, 56S), the socket (57E, 57S) opens out in the front.

5. A telephone distribution frame element according to claim 3 or 4, characterized in that the contact tab (44E, 44S) on each connector (14E, 14S) is made in one piece with an elastically-deformable blade (46E, 46S), and, at rest, the elastically-deformable blade (46E) of each input connector (14E) is in contact with the elastically-deformable blade (46S) of the corresponding output connector (14S).

6. A telephone distribution frame element according to claim 5, characterized in that the input connectors (14E) in the same row (20) and the corresponding output connectors (14S) are disposed together in the same casing (36).

7. A telephone distribution frame element according to any one of claims 1 to 4, characterized in that the input connectors (14E) in the same row (20) are disposed in one casing (36E), and the corresponding output connectors (14S) are disposed in another casing (36S).

8. A telephone distribution frame element according to claim 7, characterized in that the input connectors (14E) and the output connectors (14S) in the same row (20) are disposed on either side of the corresponding guide plate (21).

9. A telephone distribution frame element according to any one of claims 1 to 8, characterized in that the channels (16) in each of the guide plates (21) are rectilinear over their entire lengths, being delimited by parallel partitions (60), are of different lengths, going from the shortest to the longest in succession, all opening out into a common trough (61) which slants relative to said partitions (60), and all covered with a common closing panel (62) which has a sloping edge (65) extending along the edge of the trough (61) into which the channels open out.

10. A telephone distribution frame element according to any one of claims 1 to 9, characterized in that the rows (20) of connectors (14E, 14S) are disposed in pairs, with one passage (22) for a filtering and/or protection module (17) on either side of each pair, and a gap (33) between the two rows (20) in each pair.

11. A telephone distribution frame element according to claim 10, characterized in that the connection terminal (15) on each of the input connectors (14E) is open to the passage (22) and is set slightly back therefrom, and each of the output connectors (14S) includes at least one connection terminal (15) which is open to the gap (33) and which projects into said gap.

12. A telephone distribution frame element according to any one of claims 1 to 11, characterized in that, when it is a connection strip, a cap (48) is provided to the rear of the input connectors (14E) in each of the rows (20), between the row (20) in question and the corresponding guide plate (21), to delimit a channel (49) suitable for guiding the incoming wires (11E).

13. A telephone distribution frame element according to claim 12, characterized in that a duct (50) for the incoming wires (11E) runs along the bases of the rows (20) of connectors (14E, 14S), which duct extends transversely relative to the rows (20), and all the channels (49) at the rear of the input connectors (14E) open out into the duct.

14. A telephone distribution frame element according to any one of claims 1 to 13, characterized in that its housing (12) includes a cage (24) in which the rows (20) of connectors (14E, 14S) are installed, and a support (26) which is secured to said cage (24) to the rear thereof, and in which the guide plates (21) are installed.

15. A telephone distribution frame element according to claim 14, characterized in that said support (26) constitutes a cabinet body which abuts against the cage (24) via the opening in the body and is associated therewith, and which has cutouts (31) in one of its walls (27), which cutouts are suitable for receiving the guide plates (21).
